Europäisches Patentamt

European Patent Office

Office européen des brevets

(11) Publication number: **0 457 303 B1**

# EUROPEAN PATENT SPECIFICATION

(45) Date of publication of patent specification: **12.10.94**  (51) Int. Cl.5: **C02F 1/04**, B01D 3/02

(21) Application number: **91107861.6**

(22) Date of filing: **15.05.91**

(54) **Apparatus for concentrating waste liquor from photographic process.**

(30) Priority: **15.05.90 JP 124830/90**
  **15.05.90 JP 124831/90**

(43) Date of publication of application:
  **21.11.91 Bulletin  91/47**

(45) Publication of the grant of the patent:
  **12.10.94 Bulletin  94/41**

(84) Designated Contracting States:
  **DE GB**

(56) References cited:
  **EP-A- 0 315 373**
  **AT-B- 353 193**
  **DE-A- 3 404 248**

(73) Proprietor: **KONICA CORPORATION**
  **26-2, Nishi-shinjuku 1-chome**
  **Shinjuku-ku**
  **Tokyo 163 (JP)**

  Proprietor: **SANYO ELECTRIC CO., LTD.**
  **18, 2 chome, Keihan-Hondori**
  **Moriguchi-shi Osaka 570 (JP)**

(72) Inventor: **Kuremastu, Masayuki**
  **c/o Konica Corp.,**
  **1, Sakura-machi**
  **Hino-shi, Tokyo (JP)**
  Inventor: **Goto, Nobutaka**
  **c/o Konica Corp.,**
  **1, Sakura-machi**
  **Hino-shi, Tokyo (JP)**

(74) Representative: **Henkel, Feiler, Hänzel & Partner**
  **Möhlstrasse 37**
  **D-81675 München (DE)**

EP 0 457 303 B1

**Description**

**1. Field of the Invention**

The present invention relates to an apparatus for concentrating waste liquor produced in a process for developing photosensitive materials in an automatic photograph developing machine.

**2. Description of the Prior Art**

Conventionally, silver halide photosensitive materials are processed by a combination of processes using process liquors relating to one or two or more functions such as developing, fixing, washing, and the like, for black and white photography, and color developing, bleaching / fixing, (or bleaching and fixing), washing, and stabilizing, and the like, in the case of color photography.

In the handling of large amounts of photosensitive materials for a photographic process, the components which are consumed in the process are replenished, or a means is adopted by which the characteristics of the process solutions are uniformly maintained by removing components (for example, bromide ions in the developing solution, or complex silver salts in the fixing solution) by elution from the process liquor or concentrating by evaporation, to guarantee the uniformity of the components of the processing solutions. In order to perform this replenishment, the replenishing solutions are added to the process solutions, and part of the process solution is discarded to remove components concentrated in the photographic process.

In recent years a change has been taking place toward a system in which the quantities for replenishment are widely reduced from the aspect of pollution or for economic reasons, by using wash water to make up the replenishment liquid. However, the waste liquor from the photographic process is passed from the process tank of the automatic developing machine through the waste water piping and is diluted by the cooling water from the automatic developing machine and the waste wash water and discharged to sewer or the like.

Through the strengthening of pollution regulations in recent years, while it is still possible to discharge wash water and cooling water to the sewer system or to waterways, the discharge of photographic process liquids other than these (for example, developing solution, fixing solution, color developing solution, bleaching / fixing, (or bleaching and fixing) solution, stabilizing solution, and the like) is essentially impossible. For this reason, companies in the photographic processing industry contract with other companies specializing in waste disposal to handle their waste liquors, or install antipollution equipment. However, when the waste disposal is entrusted to a specialist, the waste materials must be stored, which requires a lot of space, and the cost is extremely high. By the same token, the installation of antipollution equipment has the drawbacks that the first cost is very high and a considerably large area is required to install the equipment.

Specifically, methods for reducing the pollution load from waste liquor from the photographic process, which are commonly known, include activated sludge processes (for example, Japanese Patent Publications 51-12943, 51-7952, and the like), evaporation processes (Japanese Laid Open Patent Applications 49-89437, 56-33996, and the like), electrolytic oxidation processes (Japanese Laid Open Patent Applications 48-84462, 49-119458, Japanese Patent Publication 53-43478, Japanese Laid Open Patent Application 49-119457, and the like), ion exchange methods (Japanese Patent Publication 51-37704, Japanese Laid Open Patent Application 53-383, Japanese Patent Publication 53-43271, and the like), reverse osmosis methods (Japanese Laid Open Patent Application 49-22463), chemical processing methods (Japanese Laid Open Patent Application 49-64257, Japanese Patent Publication 57-37396, Japanese Laid Open Patent Applications 53-12152, 49-58833, 53-63763, Japanese Patent Publication 57-395, and the like), but these have not proved to be adequate.

Because of restrictions related to water resources, the increasing costs for water supply and disposal, the ease of installing and operating automatic developing machines, the operating environment around automatic developing machines, and the like, there has recently been a move toward use of the stabilizing process in place of water washing, so that the photographic process using an automatic developing machine with no external piping hook up for the supply and discharge of wash water (the so-called waterless developing machine) is becoming popular. With this type of process it is also desired to eliminate cooling water for controlling the temperature of the process solutions. The waste liquor from an automatic developing machine using a photographic process which essentially does not use wash water or cooling water is not diluted and therefore the pollution load is extremely high, but, on the other hand, the volume of waste liquor is low.

Accordingly, because the amount of waste liquor is low external piping for water supply and disposal can be omitted. This results in the elimination of the drawback of lack of mobility in conventional automatic developing machines once installed because of the piping, as well as the elimination of other drawbacks such as lack of space, cost of turning piping during installation, cost of energy for hot water supply, and the like. The major advantages of compactness and ease of operation can therefore be demonstrated, making it possible to use an automatic developing machine as a piece of office equipment.

However, as opposed to these advantages, this waste liquor represents an extremely high pollution load so that pollution control regulations make it completely impossible to dispose of this material in waterways or the sewage system. Furthermore, this type of photographic process (using large volumes of running water and no wash water) generates only small quantities of waste material. Nevertheless, even a relatively small-scale color processing laboratory will produce about 10 liters per day.

Accordingly, this waste is usually collected by a specialized company and subjected to a secondary or tertiary processing to be rendered non-polluting. However, because of the rising costs of collection, not only is the cost of removing waste liquor rising year after year, but the efficiency of collections from minilabs is poor, so that it is frequently impossible to have the wastes collected and the shop fills up with these wastes.

In order to solve such problems, research has been conducted into heating the photographic process waste liquor, evaporating off the water to the point of drying and hardening, or simply hardening, for example, as disclosed in Japanese Laid Open Patent Application 60-70841. Research by the inventors of the present invention have shown that when the photographic process waste liquor is evaporated, gases ranging from noxious to extremely malodorous, such as sulfur dioxide, hydrogen sulfide, ammonia gas, and the like are produced. These gases are known to be produced by high temperature decomposition of ammonium thiosulfuric acid and sulfites (ammonium salts, sodium salts, or potassium salts) which are frequently used in fixing solutions and bleaching/fixing solutions. Also, during the evaporation process the water in the waste liquor turns into vapor and its volume increases greatly, and the pressure within the apparatus increases. This pressure causes the abovementioned noxious and malodorous gases to be expelled from the equipment creating an extremely undesirable working environment.

Accordingly, to solve these problems a method has been disclosed in Japanese Laid Open Patent Application 60-70841 by which the exhaust gases are treated with activated carbon in the exhaust gas piping section. However, this method has a major drawback inasmuch as the vapor from the large quantity of water in the waste liquor condenses in the exhaust gas handling section and the gas absorption agent becomes covered with moisture, which results in the gas absorption capability being momentarily lost. This method has, therefore, not yet been applied in practice.

The inventors of the present invention, in order to elimate such problems, have provided a cooling and condensing means which condenses the vapor produced in the process of evaporating the waste liquors from the photographic process. In addition, the inventors have proposed a method and a device for processing the waste liquor from the photographic process whereby the condensed water produced during this condensation is processed, and the non-condensable components are also processed and discharged from the process.

By means of the above proposal, the following types of problem areas have been discovered. Specifically, the vapors produced in the evaporation process are condensed by the cooling and condensing means, but the cooling and condensing efficiencies are poor and the percentage of vapors discharged from the equipment in the noncondensed state is high, therefore the percentage of malodorous and noxious gases discharged from the equipment is also high, even though these gases are treated with activated carbon. Furthermore, the water condensed in the cooling and condensing means has an unpleasant odor when discharged, even though it has been treated with activated carbon, so the pollution load is high and there are occasions when this material cannot be discharged to the sewer without further treatment.

The space in a shop is usually very restricted because of the minilab, so the bad odors produced in the handling of the photographic process solutions are not the only problem. Installation space for the waste liquor treatment equipment also presents a major problem. The first cost of this equipment and also the running costs are very important problems. Accordingly, there is considerable need for compact and low priced equipment for processing the waste liquor from the photographic process, which can operate without the production of malodorous and noxious gases, and can also provide stable processing at a low running cost.

Because of the need for such a process, the inventors of the present invention have, in Japanese Laid Open Patent Application 63-151301, proposed the complete avoidance of the production of malodorous gases by using a heat pump for evaporation and concentration of waste liquor from the photographic process, at low pressure in an evaporator. However, in this equipment, the vapors from an evaporation and concentration chamber are led to a separately provided cooling chamber for condensation, and because there are two chambers in parallel the equipment is large and occupies considerable space, which is undesirable.

In the abovementioned equipment, the vapor produced in the evaporation process is condensed by a cooling and condensing means, but because the concentrated material produced by evaporation and concentration accumulates in the evaporation means, a valve, provided for example in the evaporation means, is opened and the material is removed and stored in waste disposal bags or containers.

However, the concentrated materials tend to adhere to the inner walls and the like of the evaporation means, so that leakage is produced which causes considerable trouble. Furthermore, the concentrated materials which are removed from the evaporation means and stored in bags or containers contains a high percentage of water, creating the problems of soiling of the equipment and trouble in handling a large amount of material.

## SUMMARY OF THE INVENTION

A first object of the present invention is to provide, with due consideration to the drawbacks of such conventional devices, an apparatus for concentrating waste liquor from a photographic process wherein the equipment for restraining the production of malodorous gases is small and heat transmission is highly efficient.

A second object of the present invention is to provide a small-sized processing device for waste liquor from a photographic process wherein the water fraction from the concentrated material produced by evaporation and concentration is adequately removed and taken out, soiling of the process equipment is prevented, and handling is easy.

The first object of the present invention is achieved by the provision of an apparatus for concentrating waste liquor from a photographic process comprising an evaporation and concentration chamber using a heating section of a heat pump as a heat source for evaporating waste liquor from a photographic process; and a cooling and condensation chamber using a cooling section of the heat pump for cooling and condensing the vapor from the waste liquor from a photographic process produced as a result of the heating; wherein the evaporation and concentration chamber and the cooling and condensation chamber are arranged as two chambers adjacently positioned in mutual communication and the inner pressure in both chambers can be reduced.

The second object of the present invention is achieved by the provision of an apparatus for concentrating waste liquor from a photographic process wherein a heating section of a heat pump is used as a heat source for heating, evaporating, and concentrating the waste liquor from a photographic process; and a cooling section of a heat pump is used as a cooling and condensing means for the vapor from the waste liquor from a photographic process produced as a result of the heating. The heating section and the evaporating and concentrating section are in communication. A pressure reducing means is provided for completely reducing the pressure, and the heating section of the heat pump for heating and concentrating the waste liquor extends from within the concentrated liquor to above the surface of the liquor, and/or from above the liquid surface to within the concentrated liquor.

In the present invention, the heating section of the heat pump is a shell, which includes a compressor for the cooler medium gas, and is sealed in a continuous closed loop. The cooling medium gas is compressed in the compressor so that its temperature rises, and is discharged into one side of the shell where, with the shell wall as a boundary, it contacts a heat-receiving body. The heat in the cooling medium gas with the elevated temperature is discharged through heating this heat-receiving body.

The heat pump cooling section has a configuration in which the heat pump cooling medium in the closed loop undergoes a temperature drop at the suction side of the compressor, and the cooling medium gas with the lowered temperature, with the wall of the shell as boundary, is caused to contact a body to be cooled (in this case water vapor) and cools that body.

Both the heating section and the cooling section of the heat pump are formed in spiral piping form and have a high heat conduction efficiency because the heat conducting surface area is large.

Next, the reason for using a low pressure means which reduces the pressure in the entire system is because it has been observed that by heating under low pressure, the temperature of vaporization of the moisture fraction of the waste liquor is lowered. This occurs because by holding the temperature to which the waste liquor is heated below 90°C, the ammonium thiosulfuric acid and sulfites and the like contained in the waste liquor are not broken down. This results in only the moisture fraction being evaporated, with good efficiency.

The reason that the heat pump heating section extends continuously from within the concentrated liquor to above the surface of the liquor, and/or from above the liquid surface to within the concentrated liquor is because it has been discovered that by this configuration bumping caused by heating can be controlled so that evaporation efficiency is increased.

Observations by the inventors of the present invention clearly showed that the phenomenon of acceleration of the movement of the vapor occurs when heating is applied to the surface of the liquid, and this is effective in increasing the evaporation efficiency from within the concentrated liquor.

Comparisons by experiment showed that a unit with the configuration of this invention evaporates a large amount of water, compared with only about 25% in a unit which heats within the liquor only.

Furthermore, the heating section for the waste liquor from the photographic process communicates with the condensation section and the entire unit is under low pressure because the lowered pressure increases the speed of evaporation, and by shortening the channel as far as the condensation section, the device can be made small and at low cost.

## BRIEF DESCRIPTION OF ACCOMPANYING DRAWINGS

These and other objects, features, and advantages of the present invention will become more apparent from the following description of the preferred embodiments taken in conjunction with the accompanying drawings, in which:

FIG.1 is a schematic diagram of an embodiment of the apparatus for concentrating waste liquor from a photographic process of the present invention.

FIG.2, FIG.3, and FIG.4 are schematic diagrams showing different positional relationships of the evaporation and concentration chamber and the cooling and condensation chamber of the apparatus for concentrating waste liquor from a photographic process of the present invention.

FIG.5A is a schematic diagram of the elevation of another embodiment of the apparatus for concentrating waste liquor from a photographic process of the present invention.

FIG.5B is a schematic diagram of the upper surface of the apparatus for concentrating waste liquor of the present invention.

FIG.5C is a view taken on the line C - C of FIG.5A.

FIG.6 is a schematic diagram of yet another embodiment of the apparatus for concentrating waste liquor from a photographic process of the present invention.

FIG.7 and FIG.8 are diagrams showing different arrangements of the heating section used in the apparatus for concentrating waste liquor of the present invention.

## DETAILED DESCRIPTION OF THE PREFERRED EMBODIMENTS

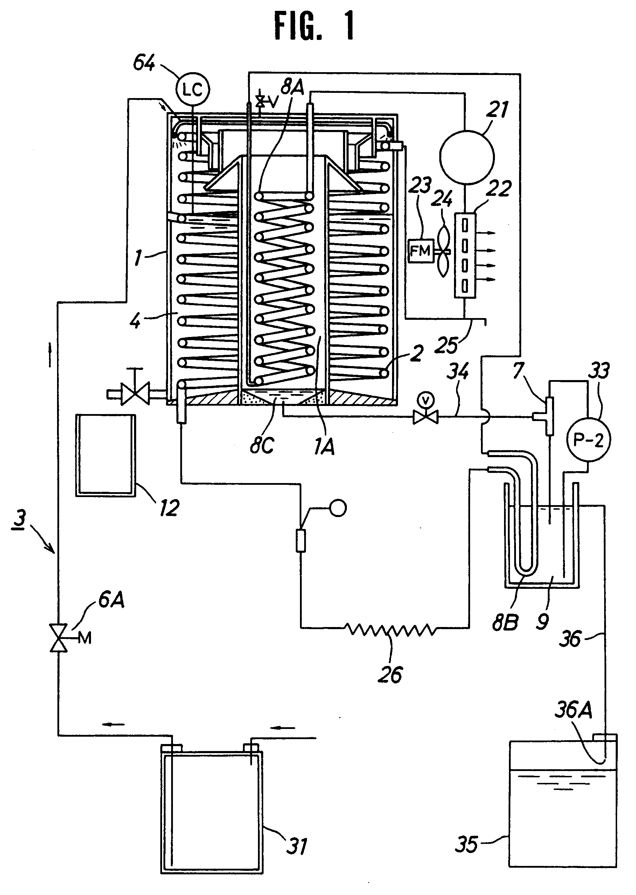

An embodiment of the evaporator concentrator of the present invention will now be explained with reference to the schematic diagram of FIG.1.

A cooling and condensation chamber 1A, into which waste liquor from a photographic process is introduced and accumulated, is provided almost concentrically inside an evaporation and concentration chamber 1 which can withstand reduced pressures. The upper section of one chamber communicates with the upper section of the other. Both chambers are connected in common to a pressure reducing means 7 and are subjected to a reduced pressure. It is commonly known that boiling occurs at a lower boiling point when a material is subjected to a pressure below atmospheric. In this embodiment evaporation is carried out under a reduced pressure at a low temperature at which gas generation is strongly inhibited. A heating means 2 is provided in a three-dimensional arrangement inside the chamber 1, and the lower section of the heating means 2 is immersed in an accumulation section 4 for the waste liquor from a photographic process. The waste liquor is heated and the upper portion is propelled from the accumulation section 4 into the vapor space. In this section, the waste liquor is fed from a waste liquor storage vessel 31 through a waste liquor feed means 3 by means of a magnetic valve 6A into the chamber 1 where it is heated to vaporization under reduced pressure. Heating and vaporization by a droplet dispersion process is repeated, so that the liquor is concentrated rapidly and with good efficiency.

When the evaporated water fraction is compressed through the provision of a cooling means 8A in the form of a spiral pipe which forms a guide section for the condensed water in the cooling and condensing chamber 1A, which passes through the communication section provided on the upper section inside the evaporation and concentration chamber 1, and a water receiver 8C on the lower section of the chamber 1A, this contributes to the stabilization of the reduced pressure inside both chambers. The heating and vaporization is repeated, and a component which hardens under high concentration is received and collected in a vessel 12 connected to the lower section of the evaporation and concentration chamber 1. In the present invention, the reason for the three-dimensional positioning of the heating means 2 extending from within the liquid into the vapor space, is that the portion within the liquid is mainly exposed to preheating of the waste liquor, while the portion in the vapor space is largely affected by the area of contact with the waste liquor which is dispersed in droplets in the vapor space. The result is that low temperature evaporation by which no gas is produced is carried out uniformly with good efficiency. Also, the cooling means 8A is provided inside the evaporation and concentration chamber 1 and the concentrically positioned cooling and condensing chamber 1A, traps, cools and condenses the water vapor which passes through the communication section and collects this vapor as drops of water. This disrupts the balance of the reduced pressure inside the two chambers because of the vapor produced, and because the stipulated reduced pressure state is maintained by the pressure reducing device 7 (an ejector is used in the present invention) the effect of a large negative load is mitigated. Specifically, at the point where the pressure rises inside the two chambers from the production of vapor, cooling and condensation occurs immediately and the pressure increase is restrained.

In this configuration, when the portion of the heating means 2 in the liquor reaches the optimum temperature for low pressure evaporation, the heating means 2 and the integrally provided part in the vapor are maintained at the same temperature, and from the difference in the coefficient of heat transfer, the actual surface temperature of the portion in the vapor becomes high, and when this touches the waste liquor from the photographic process, disagreeable gases are produced from the sudden heating. It is desirable that the amount of waste liquor which is supplied in dispersed form from the upper part be heated.

Aheat pump is used as the heating means 2 and the cooling means 8A in the present invention. The water vapor contacts the surface of the cooling means 8A and is condensed into water droplets which run along the cooling means 8A to be collected in a water collection vessel 9. The surface temperature of the heating means 2 is preferably less than 100°C, and the most desirable temperature is in the 20° to 60°C range to prevent malodorous gas production which is one of the main purposes of the present invention.

The heat radiation section of the heat pump is used as the heating means 2, and the heat absorbing section of the heat pump is used as the cooling means 8A and a cooling means 8B provided in the water collection vessel 9.

A charge pipe 25 for charging the condensing evaporator of the heat pump which constitutes the heating means 2, and a capillary tube 26 which plays the role of an expansion valve installed in the line after the heating means 2, as well as a compressor 21 for compressing the cooling medium positioned on the outside of the cooling means 8A and an air cooling condensing evaporator 22 for air cooling and condensing in order to reduce the cooling medium which is at a high temperature from being compressed to a suitable set temperature, and a fan 24 and fan motor 23 for the air cooling condensing evaporator 22, are all installed outside the evaporation and concentration chamber 1.

However, the space occupied by these externally positioned members is not very large, and the major part of the installed area is taken up by the two chambers.

The suitable set temperature is a temperature considerably below the temperature at which evaporation and concentration effectively takes place while restraining the production of malodorous gases. As previously stated this is set at no higher than 60°C and no lower than 20°C for best results as determined experimentally by the inventor of the present invention.

The cooling medium passes through the condensing evaporator of the heating means 2, and from the capillary tube 26, connected to the cooling means 8B in the water collection vessel 9. It then passes through the inside of a pipe connected to a cooling medium vaporizing evaporator inside the cooling means 8A, specifically the cooling condensing chamber 1A, and is returned to the compressor 21 outside the two chambers.

The cooled water inside the water collection vessel 9 is fed to the pressure reduction device (ejector) 7 by the water recirculating pipe 33 (P-2), and when the water drawn by a pipe 34 from a condensed liquor collecting port 8C of the cooling and condensing chamber 1A enters the water collection vessel 9, a pressure reduction takes place simultaneously inside the two chambers.

The water overflowing from the water collection vessel 9 is fed into a water tank 35 through a pipe 36 and is subsequently discharged to sewer.

In this way, a rather large amount of vapor is liquified by means of a rather simple heat pump, and a small amount is discharged as vapor through a discharge vapor port 36A so that the formation of malodorous gases is completely prevented. Further, the volume and period of replenishment of waste liquor into the evaporation and concentration chamber 1 is determined from data detected by a level sensor (LC) 64.

In this embodiment of the present invention, the evaporation and concentration chamber 1 and the cooling and condensation chamber 1A are not provided separately and separated, but are provided in two almost concentric units so that a large space is not required for installation, and the unit can be made rather small. As a result, the waste liquor can be treated on-line in a small-scale laboratory so increased space is not required.

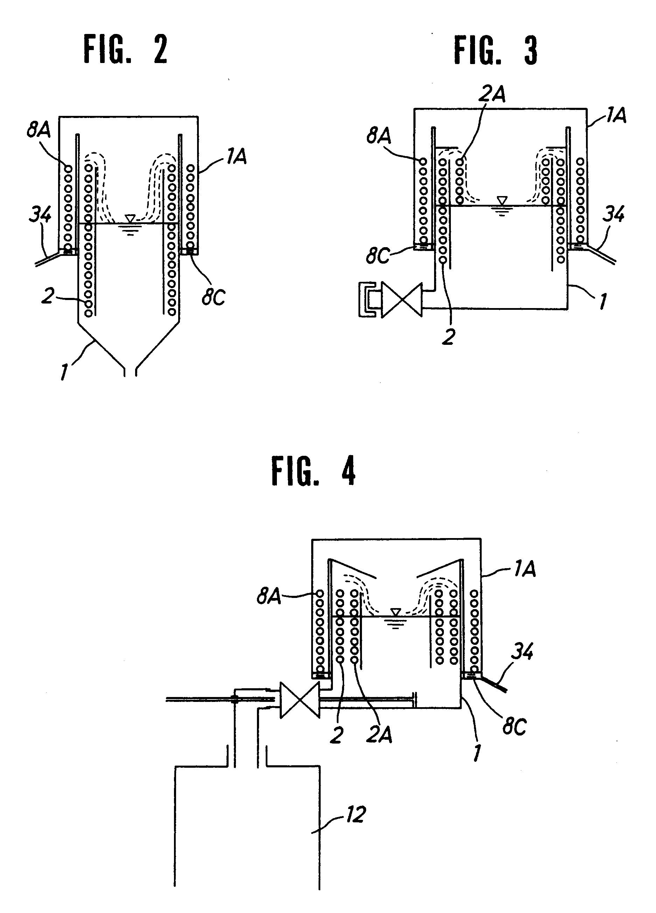

Furthermore, in the present embodiment, the evaporation and concentration chamber was put on the outside and the cooling and condensing chamber on the inside, but, as shown in FIGs.2, 3, 4, and 5A to 5C, it is also possible to have the evaporation and concentration chamber on the inside and the cooling and condensing chamber on the outside

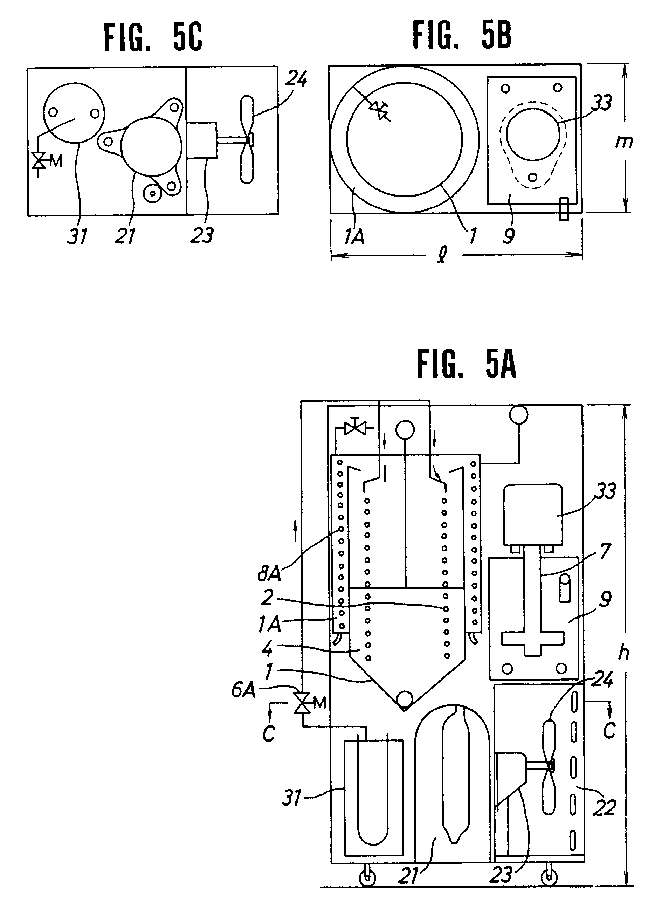

FIG.5A is a sectional view of the elevation of this type of embodiment. FIG.5B shows the upper surface of the same embodiment, while FIG.5C is a view taken on the line C - C of FIG.5A.

The foundation surface, as shown in FIG.5B and FIG.5C, is an extremely small area, with a length $\ell$ and a width m of 500 mm and 300 mm respectively, and the height h as shown in FIG.5A is 950 mm, providing a vey small, compact configuration.

The cooling medium pipe 8A of the cooling and condensing chamber 1A is positioned on the outside of the heating section (cooling medium pipe 2), and the surface area of the cooling medium pipe 8A is greater than that of the cooling medium pipe 2.

As a result, the condensed water forms very quickly, and the effect of the pressure reduction is also beneficial. Also, the phenomenon by which the amount of pressure reduction causes the vapor pressure to increase because of the vapor from evaporation in the evaporation and concentration chamber, is also eliminated, which is desirable.

The inventor of the present invention set the ratio of the surface area of the cooling medium pipe 8A of the cooling and condensation chamber 1A to the surface area of the cooling medium pipe 2 of the evaporation and concentration chamber 1 as shown in the following table and succeeded in obtaining a striking increase in the evaporation and concentration efficiencies, also shown in the following table.

|  | Outside diam of cooling medium pipe windings | No of turns | Pipe OD | Evaporation, concentration efficiency |
|---|---|---|---|---|
| Evap/conc chamber | 150 | 20 | 10 to 20 | 25% up |
| Cooling /condens chamber (1) | 260 to 270 | 20 | 10 | 200 to 300% up |
| Cooling / condens chamber (2) | 260 to 270 | 12 | 10 | 100% up |

With respect to the above comparisons, the cooling medium pipes for evaporation and concentration and for cooling and condensing are practically the same dimensions and the surface areas are the same, therefore the two are not double chambers, but the former makes up the lower section, and the latter the upper section, in an almost concentric two-stage construction method. The units for outside diameters in the table are millimeters.

FIG.3 shows a unit with a double winding of cooling medium pipes for the part above the surface of the liquid in the section heated by the heat pump. FIG.4 is a unit which consists entirely of double-wound cooling medium pipe for heating. However, it is essential that the pipe surface area not increase because of this, so the pipe diameter is made small, and the evaporation and concentration efficiency is improved.

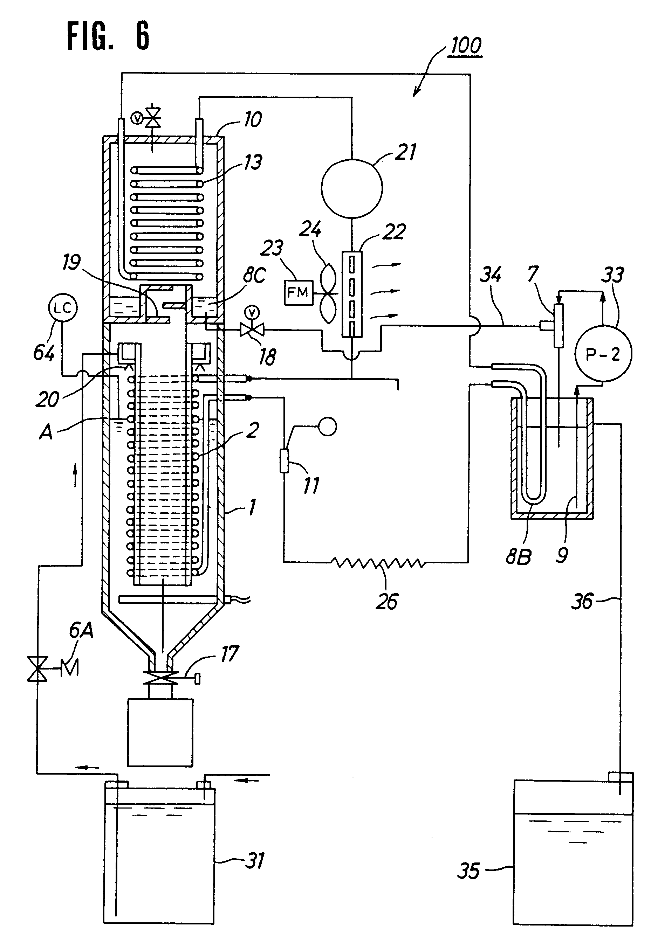

FIG.6 shows the complete configuration of yet another embodiment of the apparatus for concentrating waste liquor from a photographic process of the present invention.

This embodiment is of two-stage construction in which the evaporation and concentration chamber is a single stage section and the cooling and condensing chamber is a two-stage section. Parts which have the same construction as in the embodiment shown in FIG.1 are designated by the same reference numerals as in FIG.1.

When a water circulating pump 33 is started, water pumped up from a vessel 9 is sprayed downward with good force from an ejector 7. At this time, an air vent 34 connected to a tee at the ejector 7 is subjected to a negative pressure, and when a valve 18 is opened, air is evacuated from an evaporation and concentration section 10 and an evaporation and concentration chamber 1 (hereinafter simply chamber 1) which communicates with the section 10, to subject the section 10 and the chamber 1 to a reduced pressure. Next, when a valve 6A is opened this reduced pressure causes waste liquor to be drawn up from a vessel 31 and sprayed into the chamber 1 through a nozzle 20 provided in the upper section of the chamber 1. Then, when the waste liquor accumulated in the chamber 1 reaches the surface level A, this is detected by the liquid surface sensor 64, and the valve 6A closes to terminate the charging of the liquor. The valve 6A may be a magnetic valve.

Next, a heat pump 100 will be described in detail. The heat pump 100 comprises a compressor 21, an air cooler-condenser 22, a propellor fan 24 driven by a fan motor 23, a heating section 2, a cooling coil 8B, a cooling section 13, the required connecting piping, and the cooling medium filled into this system.

The cooling medium compressed by the compressor 21 reaches a high temperature, and is sprayed onto the air cooler-condenser 22. Here, controlled air cooling is performed by the propellor fan 24 driven by the fan motor 23. This prevents runaway by the heat pump, controls the temperature of the heating section 2, and prevents the production of gases at high temperatures.

Next, the cooling medium which has reached a suitable temperature by controlled air cooling is introduced into the heating section 2. The heating section 2 continues to the section below the liquid surface A of the waste liquor introduced into the chamber 1 and also is positioned above the liquid surface. The waste liquor is heated at the section below the liquid surface A and the resulting vapors are heated at the section above the water surface. The cooling medium which passes through the heating section 2 also passes through a drier 11 and a capillary tube 26, and enters the cooling coil 8B, then, after cooling the water in the vessel 9, enters the cooling section 13. Here, after the vapor evaporated in the chamber 1 is cooled, the cooling medium is returned to the compressor 21 to complete one cycle, then the cycle is repeated.

The feature of this configuration is that the spraying force of the water is activated by the water circulation pump as the pressure reducing means, and this water is cooled using the cooling medium from the heat pump. Also, the heating section (condensing evaporator) of the heat pump is used as the heat source for the heating and evaporation of the waste liquor. Because the evaporation heating is carried out not only under the surface of the liquid, but also above, the vapor moves upward quickly so that the vaporization effect is broadly improved.

The efficient design effectively provides high operating efficiency and compactness because of the configuration by which reducing the pressure on the chamber 1 and opening the valve 6A causes the waste liquor to be drawn up without the use of a pump and fed into the chamber 1. With this configuration, when heating and evaporation takes place under reduced pressure, the phenomenon occurs wherein the waste liquor is propelled strongly upward from the waste liquor surface in the chamber 1. A baffle plate 19 is therefore provided to prevent the waste liquor from entering the cooling section 13.

The resulting water vapor is cooled and condensed in the form of droplets in the cooling section 13, accumulates in the water receiver 8C of the vapor condensing section 10, passes through the valve 18 because of the pressure reduction means, and is discharged into the vessel 9. An overflow port is provided in the vessel 9 and the overflow water from the condensed water flows through a pipe 36 into the condensate tank 35 where it is collected.

The concentration of the vapor proceeds in this manner, and when the waste liquor is converted into sludge the balance of this cooling/heating cycle suddenly reaches a point where it is destroyed, and a sudden change in the temperature of the cooling medium from 100°C to 120°C is detected in the discharge port of the compressor 21 after compression. Accordingly, the conversion of the waste liquor to sludge is detected by the temperature sensor through the detection of this temperature change, the compressor 21 is halted, and the water circulation pump 33 is halted. At this time, because the vessel 9 is open to atmospheric pressure, the water in the vessel 9 is sucked through the air vent 34 into the condensing section 10 because of the reduced pressure conditions in the condensing section 10. To keep this from happening the valve 18 is provided as a three-way valve so that when the compressor 21 and water circulation pump are halted the air vent 34 side is closed and the port through which the air passes is opened. However, if a three-way valve is not used, it is desirable to provide a magnetic valve or the like which opens and closes the port through which the air in the air vent 34 passes. This may be opened to balance with atmospheric pressure simultaneously with the abovementioned halt actions.

The sludge is discharged by opening the valve 17 at the bottom of the chamber 1. Because this collected sludge contains a high concentration of silver it is placed in sealed containers as a valuable material. The silver is recovered separately after which the sludge is disposed of in a suitable location.

The waste liquor can be concentrated 18 to 20 times by means of this device, and the amount converted to sludge exceeds 98%.

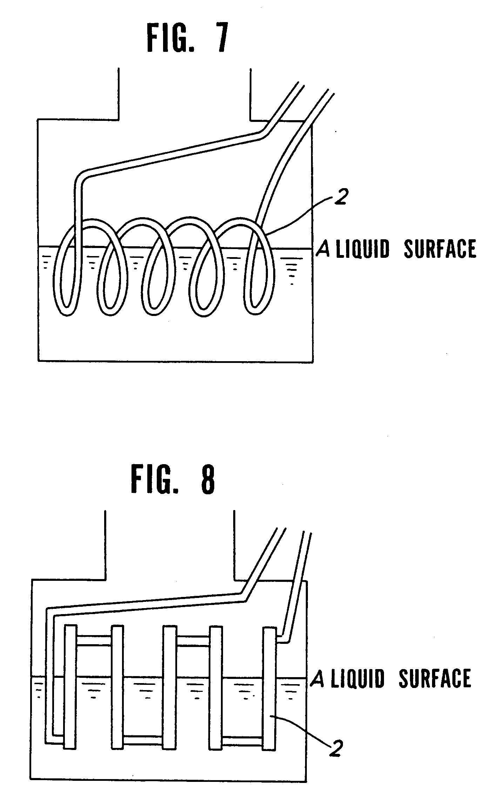

FIG.7 and FIG.8 show other arrangements of the heating section 2.

In FIG.7 the heating section 2 takes the form of a spiral coil lying on its side, with the upper part of the coil protruding from the surface of the liquid. In FIG.8 the heating section 2, rather than a small pipe, is in the form of hollow plates joined together with the upper part on the surface of the liquid.

The apparatus for concentrating waste liquor from a photographic process of the present invention can provide good heating efficiency, small size, and low cost because of the abovementioned configurations wherein the heating section of the heat pump for heating and concentrating the waste liquor extends from within the concentrated liquor to above the surface of the liquor, and/or from above the liquid surface to within the concentrated liquor.

Because the evaporation and concentration chamber and the cooling and condensation chamber are arranged double concentrically positioned, and the upper sections of the two chambers are in communication, the inner pressure in the apparatus can be reduced. Therefore, the concentration of malodorous gases in the condensed vapor from the apparatus of the present invention can be maintained at a very low level. At the same time, the vapor concentration device itself can be kept small so that it is highly suitable for use in a small laboratory since a large space is not required for installation, and the waste liquor can easily be treated on-line, in a stable manner.

Because the evaporation and concentration chamber and the cooling and condensation chamber are under reduced pressure, the noncondensable gases are exhausted and discharged from both chambers. There is therefore no impediment to heat transfer caused by the presence of noncondensable gases so that evaporation and concentration, cooling and condensation are performed without hindrance.

## Claims

1. An apparatus for concentrating waste liquor comprising:
   an evaporation and concentration chamber (1) using a heating section (2) of a heat pump as a heat source for evaporating waste liquor; and
   a cooling and condensation chamber (1A) using a cooling section of the heat pump for cooling and condensing the vapor from the waste liquor produced as a result of the heating; wherein the evaporation and concentration chamber (1) and the cooling and condensation chamber (1A) are arranged as two chambers adjacently positioned, and both chambers are in communication and the inner pressure in both chambers can be reduced,
   characterized by means for positioning
   the heating section (2) of the heat pump such that it extends from above the waste liquor to within the waste liquor.

2. The apparatus for concentrating waste liquor according to claim 1, wherein:
   the evaporation and concentration chamber (1) and the cooling and condensation chamber (1A) are positioned concentrically.

3. The apparatus for concentrating waste liquor according to claim 1, wherein:
   the evaporation and concentration chamber (1) and the cooling and condensation chamber (1A) are positioned one above the other.

4. The apparatus for concentrating waste liquor according to claim 2, wherein:
   the evaporation and concentration chamber (1) is positioned on the outside, and the cooling and condensation chamber (1A) is positioned on the inside.

5. The apparatus for concentrating waste liquor according to claim 2, wherein:
   the cooling and condensation chamber (1A) is positioned on the outside, and the evaporation and concentration chamber (1) is positioned on the inside.

6. The apparatus for concentrating waste liquor according to any one of claims 2, 4 and 5, wherein:
   the heating section (2) of the heat pump or the cooling section of the heat pump which is positioned in the outer chamber of the two chambers forms a spiral so as to be along the inner chamber.

7. The apparatus for concentrating waste liquor according to any one of claims 1 to 6, wherein:
   the surface area of the cooling section of the heat pump in the cooling and condensation chamber (1A) is greater than the surface area of the heating section (2) of the heat pump in the evaporation and concentration chamber (1).

8. The apparatus for concentrating waste liquor according to any one of claims 1 to 7, wherein:
the heat pump includes a compressor (21) to compress the cooling medium, and the heating section (2) of the heat pump uses the cooling medium compressed by the compressor (21) for the heat source, the apparatus further comprises cooling means (23, 24) for cooling a portion between the compressor (21) and the heating section (2) of the heat pump so that the temperature of the cooling medium is in a predetermined range.

9. The apparatus for concentrating waste liquor according to any one of claims 1 to 8, further comprising:
a pressure reducer (7, 9, 33, 34), connected with at least one of the evaporation and concentration chamber (1) and the cooling and condensation chamber (1A), for reducing the pressure therein.

10. The apparatus for concentrating waste liquor according to claim 9, wherein:
the pressure reducer (7, 9, 33, 34) is provided at a bottom portion (8C) of the cooling and condensation chamber (1A) so as to reduce the pressure with a condensed liquid therein.

11. The apparatus for concentrating waste liquor according to claim 10, wherein:
the pressure reducer is an ejector (7).

12. The apparatus for concentrating waste liquor according to any one of claims 1 to 11, further comprising:
a detector (64) for detecting a level of said surface of said waste liquor in said evaporation and concentration chamber (1); and
means for supplying (3, 6A, 31) said waste liquor to said evaporation and concentration chamber (1) responsive to said detector (64) so that a part of said heating section is maintained above said surface.

13. An apparatus for concentrating waste liquor comprising:
an evaporation and concentration chamber (1) using a heating section (2) of a heat pump as a heat source for evaporating waste liquor; and
a cooling and condensation chamber (1A) using a cooling section of the heat pump for cooling and condensing the vapor from the waste liquor produced as a result of the heating; wherein the evaporation and concentration chamber (1) and the cooling and condensation chamber (1A) are arranged as two chambers adjacently positioned, and both chambers are in communication and the inner pressure in both chambers can be reduced, and
a pressure reducer (7, 9, 33, 34), connected with at least one of the evaporation and concentration chamber (1) and the cooling and condensation chamber (1A), for reducing the pressure therein, characterized in that
the evaporation and concentration chamber (1) and the cooling and condensation chamber (1A) are positioned concentrically.

14. The apparatus for concentrating waste liquor according to claim 13, wherein:
the pressure reducer (7, 9, 33, 34) is provided at a bottom portion (8C) of the cooling and condensation chamber (1A) so as to reduce the pressure with a condensed liquid therein.

15. The apparatus for concentrating waste liquor according to claim 13 or 14, wherein:
the pressure reducer is an ejector (7).

16. The apparatus for concentrating waste liquor according to any one of claims 13 to 15, wherein:
the heating section (2) of the heat pump or the cooling section of the heat pump which is positioned in the outer chamber of the two chambers forms a spiral so as to be along the inner chamber.

17. The apparatus for concentrating waste liquor according to any one of claims 13 to 16, wherein:
the surface area of the cooling section of the heat pump in the cooling and condensation chamber (1A) is greater than the surface area of the heating section (2) of the heat pump in the evaporation and concentration chamber (1).

**18.** The apparatus for concentrating waste liquor according to any one of claims 13 to 17, wherein:

the heat pump comprises a compressor (21) to compress the cooling medium, and the heating section (2) of the heat pump uses the cooling medium compressed by the compressor (21), the apparatus further comprises cooling means (23, 24) for cooling a portion between the compressor (21) and the heating section (2) of the heat pump so that the temperature of the cooling medium is in a predetermined range.

**19.** The apparatus for concentrating waste liquor according to any one of claims 13 to 18, wherein:

the evaporation and concentration chamber (1) is positioned on the outside, and the cooling and condensation chamber (1A) is positioned on the inside.

**20.** The apparatus for concentrating waste liquor according to any one of claims 13 to 18, wherein:

the cooling and condensation chamber (1A) is positioned on the outside, and the evaporation and concentration chamber (1) is positioned on the inside.

**Patentansprüche**

**1.** Vorrichtung zum Konzentrieren von Abfallflüssigkeit bzw. Ablauge, umfassend:

eine Verdampfungs- und Konzentrierkammer (1), die eine Heizsektion (2) einer Wärmepumpe als Wärmequelle für das Verdampfen der Ablauge nutzt, und

eine Kühl- und Kondensierkammer (1A), die eine Kühlsektion der Wärmepumpe für das Kühlen und Kondensieren des aufgrund der Erwärmung entstandenen Dampfes (von) der Ablauge nutzt; wobei die Verdampfungs- und Konzentrierkammer (1) sowie die Kühl- und Kondensierkammer (1A) in Form von zwei nebeneinander positionierten Kammern angeordnet sind, beide Kammern miteinander in verbindung stehen und der Innendruck in beiden Kammern reduziert sein kann;

gekennzeichnet durch Mittel zum Positionieren der Heizsektion (2) der Wärmepumpe in der Weise, daß sie sich von (einer Stelle) oberhalb der Ablauge bis in die Ablauge hinein erstreckt.

**2.** Vorrichtung zum Konzentrieren von Ablauge nach Anspruch 1, wobei:

die Verdampfungs- und Konzentrierkammer (1) sowie die Kühl- und Kondensierkammer (1A) konzentrisch angeordnet sind.

**3.** Vorrichtung zum Konzentrieren von Ablauge nach Anspruch 1, wobei:

die Verdampfungs- und Konzentrierkammer (1) sowie die Kühl- und Kondensierkammer (1A) übereinander angeordnet sind.

**4.** Vorrichtung zum Konzentrieren von Ablauge nach Anspruch 2, wobei:

die Verdampfungs- und Konzentrierkammer (1) an der Außenseite und die Kühl- und Kondensierkammer (1A) an der Innenseite angeordnet sind.

**5.** Vorrichtung zum Konzentrieren von Ablauge nach Anspruch 2, wobei:

die Kühl- und Kondensierkammer (1A) an der Außenseite und die Verdampfungs- und Konzentrierkammer (1) an der Innenseite angeordnet sind.

**6.** Vorrichtung zum Konzentrieren von Ablauge nach einem der Ansprüche 2, 4 und 5, wobei:

die Heizsektion (2) der Wärmepumpe oder die Kühlsektion der Wärmepumpe, die in der äußeren Kammer der beiden Kammern angeordnet ist, eine Spirale bzw. Schlange bildet, so daß sie sich längs der inneren Kammer befindet.

**7.** Vorrichtung zum Konzentrieren von Ablauge nach einem der Ansprüche 1 bis 6, wobei:

die Oberfläche der Kühlsektion der Wärmepumpe in der Kühl- und Kondensierkammer (1A) größer ist als die Oberfläche der Heizsektion (2) der Wärmepumpe in der Verdampfungs- und Konzentrierkammer (1).

**8.** Vorrichtung zum Konzentrieren von Ablauge nach einem der Ansprüche 1 bis 7, wobei:

die Wärmepumpe einen Verdichter (21) zum Verdichten des Kühlmittels aufweist und die Heizsektion (2) der Wärmepumpe das durch den Verdichter (21) verdichtete Kühlmittel als Wärmequelle nutzt und wobei die Vorrichtung ferner Kühleinheiten (23, 24) zum Kühlen eines Abschnitts zwischen dem Verdichter (21) und der Heizsektion (2) der Wärmepumpe aufweist, derart, daß die Temperatur des Kühlmittels innerhalb eines vorbestimmten Bereichs liegt.

9. Vorrichtung zum Konzentrieren von Ablauge nach einem der Ansprüche 1 bis 8, ferner umfassend: einen Druckminderer (7, 9, 33, 34), der mindestens einer der Verdampfungs- und Konzentrierkammer (1) und der Kühl- und Kondensierkammer (1A) zur Minderung des Drucks darin verbunden ist.

10. Vorrichtung zum Konzentrieren von Ablauge nach Anspruch 9, wobei: der Druckminderer (7, 9, 33, 34) an einem Bodenabschnitt (8C) der Kühl- und Kondensierkammer (1A) vorgesehen ist, um den Druck mit einer kondensierten Flüssigkeit darin zu senken.

11. Vorrichtung zum Konzentrieren von Ablauge nach Anspruch 10, wobei: der Druckminderer ein Ejektor (7) ist.

12. Vorrichtung zum Konzentrieren von Ablauge nach einem der Ansprüche 1 bis 11, ferner umfassend: einen Detektor (64) zum Detektieren eines Spiegels oder Pegels der Oberfläche der Ablauge in der Verdampfungs- und Konzentrierkammer (1) und
Mittel (3, 6A, 31) zum Zuspeisen der Ablauge zur Verdampfungs- und Konzentrierkammer nach Maßgabe des Detektors (64) in der Weise, daß ein Teil der Heizsektion oberhalb dieser Oberfläche bleibt.

13. Vorrichtung zum Konzentrieren von Abfallflüssigkeit bzw. Ablauge, umfassend: eine Verdampfungs- und Konzentrierkammer (1), die eine Heizsektion (2) einer Wärmepumpe als Wärmequelle für das Verdampfen der Ablauge nutzt, und
eine Kühl- und Kondensierkammer (1A), die eine Kühlsektion der Wärmepumpe für das Kühlen und Kondensieren des aufgrund der Erwärmung entstandenen Dampfes (von) der Ablauge nutzt; wobei die Verdampfungs- und Konzentrierkammer (1) sowie die Kühl- und Kondensierkammer (1A) in Form von zwei nebeneinander positionierten Kammern angeordnet sind, beide Kammern miteinander in Verbindung stehen und der Innendruck in beiden Kammern reduziert sein kann; sowie
einen Druckminderer (7, 9, 33, 34), der mit mindestens einer der Verdampfungs- und Konzentrierkammer (1) und der Kühl- und Kondensierkammer (1A) zur Minderung des Drucks darin verbunden ist; dadurch gekennzeichnet, daß
die Verdampfungs- und Konzentrierkammer (1) und die Kühl- und Kondensierkammer (1A) konzentrisch angeordnet sind.

14. Vorrichtung zum Konzentrieren von Ablauge nach Anspruch 13, wobei der Druckminderer (7, 9, 33, 34) an einem Bodenabschnitt (8C) der Kühl- und Kondensierkammer (1A) vorgesehen ist, um den Druck mit einer kondensierten Flüssigkeit darin zu senken.

15. Vorrichtung zum Konzentrieren von Ablauge nach Anspruch 13 oder 14, wobei: der Druckminderer ein Ejektor (7) ist.

16. Vorrichtung zum Konzentrieren von Ablauge nach einem der Ansprüche 13 bis 15, wobei: die Heizsektion (2) der Wärmepumpe oder die Kühlsektion der Wärmepumpe, die in der äußeren Kammer der beiden Kammern angeordnet ist, eine Spirale bzw. Schlange bildet, so daß sie sich längs der inneren Kammer befindet.

17. Vorrichtung zum Konzentrieren von Ablauge nach einem der Ansprüche 13 bis 16, wobei: die Oberfläche der Kühlsektion der Wärmepumpe in der Kühl- und Kondensierkammer (1A) größer ist als die Oberfläche der Heizsektion (2) der Wärmepumpe in der Verdampfungs- und Konzentrierkammer (1).

18. Vorrichtung zum Konzentrieren von Ablauge nach einem der Ansprüche 13 bis 17, wobei: die Wärmepumpe einen Verdichter (21) zum Verdichten des Kühlmittels aufweist und die Heizsektion (2) der Wärmepumpe das durch den Verdichter (21) verdichtete Kühlmittel nutzt und wobei die Vorrichtung ferner Kühleinheiten (23, 24) zum Kühlen eines Abschnitts zwischen dem Verdichter (21) und der Heizsektion (2) der Wärmepumpe aufweist, derart, daß die Temperatur des Kühlmittels innerhalb eines vorbestimmten Bereichs liegt.

**19.** Vorrichtung zum Konzentrieren von Ablauge nach einem der Ansprüche 13 bis 18, wobei:
die Verdampfungs- und Konzentrierkammer (1) an der Außenseite und die Kühl- und Kondensierkammer (1A) an der Innenseite angeordnet sind.

**20.** Vorrichtung zum Konzentrieren von Ablauge nach einem der Ansprüche 13 bis 18, wobei:
die Kühl- und Kondensierkammer (1A) an der Außenseite und die Verdampfungs- und Konzentrierkammer (1) an der Innenseite angeordnet sind.

**Revendications**

**1.** Appareil pour concentrer une liqueur usée, qui comprend:
- une chambre (1) d'évaporation et concentration qui utilise la partie de chauffage (2) d'une pompe à chaleur en tant que source de chaleur pour évaporer une liqueur usée, et
- une chambre (1A) de refroidissement et condensation qui utilise la partie de refroidissement de la pompe à chaleur pour refroidir et condenser la vapeur de liqueur usée produite en résultat du chauffage,
dans lequel la chambre (1) d'évaporation et concentration et la chambre (1A) de refroidissement et condensation sont disposées comme deux chambres placées adjacentes, les deux chambres sont en communication et la pression intérieure dans les deux chambres peut être abaissée,
caractérisé par des moyens pour positionner la partie de chauffage (2) de la pompe à chaleur de telle sorte qu'elle s'étende depuis au-dessus de la liqueur usée jusque dans la liqueur usée.

**2.** Appareil pour concentrer une liqueur usée selon la revendication 1, dans lequel la chambre (1) d'évaporation et concentration et la chambre (1A) de refroidissement et condensation sont disposées de façon concentrique.

**3.** Appareil pour concentrer une liqueur usée selon la revendication 1, dans lequel la chambre (1) d'évaporation et concentration et la chambre (1A) de refroidissement et condensation sont disposées l'une au dessus de l'autre.

**4.** Appareil pour concentrer une liqueur usée selon la revendication 2, dans lequel la chambre (1) d'évaporation et concentration est placée sur l'extérieur et la chambre (1A) de refroidissement et condensation est placée sur l'intérieur.

**5.** Appareil pour concentrer une liqueur usée selon la revendication 2, dans lequel la chambre (1A) de refroidissement et condensation est placée sur l'extérieur et la chambre (1) d'évaporation et concentration est placée sur l'intérieur.

**6.** Appareil pour concentrer une liqueur usée selon l'une quelconque des revendications 2, 4 et 5, dans lequel la partie de chauffage (2) de la pompe à chaleur ou la partie de refroidissement de la pompe à chaleur qui se trouve dans celle des deux chambres placée à l'extérieur forme une spirale pour se trouver le long de la chambre intérieure.

**7.** Appareil pour concentrer une liqueur usée selon l'une quelconque des revendications 1 à 6, dans lequel l'aire de la surface de la partie de refroidissement de la pompe à chaleur dans la chambre (1A) de refroidissement et condensation est supérieure à l'aire de la surface de la partie de chauffage (2) de la pompe à chaleur dans la chambre (1) d'évaporation et concentration.

**8.** Appareil pour concentrer une liqueur usée selon l'une quelconque des revendications 1 à 7, dans lequel la pompe à chaleur contient un compresseur (21) pour comprimer le fluide de refroidissement et la partie de chauffage (2) de la pompe à chaleur utilise le fluide de refroidissement comprimé par le compresseur (21) comme source de chaleur, l'appareil comprenant en outre des moyens de refroidissement (23, 24) pour refroidir une partie située entre le compresseur (21) et la partie de chauffage (2) de la pompe à chaleur afin que la température du fluide de refroidissement se trouve dans une plage prédéterminée.

**9.** Appareil pour concentrer une liqueur usée selon l'une quelconque des revendications 1 à 8, comprenant en outre un réducteur de pression (7, 9, 33, 34) branché avec l'une au moins desdites chambre (1) d'évaporation et concentration et chambre (1A) de refroidissement et condensation pour y abaisser la pression.

10. Appareil pour concentrer une liqueur usée selon la revendication 9, dans lequel le réducteur de pression (7, 9, 33, 34) est placé au niveau de la partie du fond (86) de la chambre (1A) de refroidissement et condensation pour abaisser la pression avec un liquide condensé qui s'y trouve.

11. Appareil pour concentrer une liqueur usée selon la revendication 10, dans lequel le réducteur de pression est un éjecteur (7).

12. Appareil pour concentrer une liqueur usée selon l'une quelconque des revendications 1 à 11, comprenant en outre:
   - un détecteur (64) destiné à détecter le niveau de ladite surface de ladite liqueur usée dans ladite chambre (1) d'évaporation et concentration, et
   - des moyens (3, 6A, 31) pour amener ladite liqueur usée à ladite chambre (1) d'évaporation et concentration en réponse audit détecteur (64) afin qu'une partie dudit dispositif chauffant soit maintenue au-dessus de ladite surface.

13. Appareil pour concentrer une liqueur usée, qui comprend:
   - une chambre (1) d'évaporation et concentration qui utilise la partie de chauffage (2) d'une pompe à chaleur en tant que source de chaleur pour évaporer une liqueur usée, et
   - une chambre (1A) de refroidissement et condensation qui utilise la partie de refroidissement de la pompe à chaleur pour refroidir et condenser la vapeur de liqueur usée produite en résultat du chauffage,
     dans lequel la chambre (1) d'évaporation et concentration et la chambre (1A) de refroidissement et condensation sont disposées comme deux chambres placées adjacentes, les deux chambres sont en communication et la pression intérieure dans les deux chambres peut être abaissée, et
   - un réducteur de pression (7, 9, 33, 34) branché à l'une au moins desdites chambre (1) d'évaporation et concentration et chambre (1A) de refroidissement et condensation pour y abaisser la pression. caractérisé en ce que la chambre (1) d'évaporation et concentration et la chambre (1A) de refroidissement et condensation sont disposées de façon concentrique.

14. Appareil pour concentrer une liqueur usée selon la revendication 13, dans lequel le réducteur de pression (7, 9, 33, 34) est placé au niveau de la partie du fond (86) de la chambre (1A) de refroidissement et condensation pour abaisser la pression avec un liquide condensé qui s'y trouve.

15. Appareil pour concentrer une liqueur usée selon la revendication 13 ou 14, dans lequel le réducteur de pression est un éjecteur (7).

16. Appareil pour concentrer une liqueur usée selon l'une quelconque des revendications 13 à 15, dans lequel la partie de chauffage (2) de la pompe à chaleur ou la partie de refroidissement de la pompe à chaleur qui se trouve dans celle des deux chambres placée à l'extérieur forme une spirale pour se trouver le long de la chambre intérieure.

17. Appareil pour concentrer une liqueur usée selon l'une quelconque des revendications 13 à 16, dans lequel l'aire de la surface de la partie de refroidissement de la pompe à chaleur dans la chambre (1A) de refroidissement et condensation est supérieure à l'aire de la surface de la partie de chauffage (2) de la pompe à chaleur dans la chambre (1) d'évaporation et concentration.

18. Appareil pour concentrer une liqueur usée selon l'une quelconque des revendications 13 à 17, dans lequel la pompe à chaleur contient un compresseur (21) pour comprimer le fluide de refroidissement et la partie de chauffage (2) de la pompe à chaleur utilise le fluide de refroidissement comprimé par le, compresseur (21), l'appareil comprenant en outre des moyens de refroidissement (23, 24) pour refroidir une partie située entre le compresseur (21) et la partie de chauffage (2) de la pompe à chaleur afin que la température du fluide de refroidissement se trouve dans une plage prédéterminée.

19. Appareil pour concentrer une liqueur usée selon l'une quelconque des revendications 13 à 18, dans lequel là chambre (1) d'évaporation et concentration est placée sur l'extérieur et la chambre (1A) de refroidissement et condensation est placée sur l'intérieur.

20. Appareil pour concentrer une liqueur usée selon l'une quelconque des revendications 13 à 18, dans lequel la chambre (1A) de refroidissement et condensation est placée sur l'extérieur et la chambre (1) d'évaporation et concentration est placée sur l'intérieur.

# FIG. 1

# FIG. 2

# FIG. 3

# FIG. 4

EP 0 457 303 B1

# FIG. 5C

# FIG. 5B

# FIG. 5A

# FIG. 6

# FIG. 7

*A* LIQUID SURFACE

# FIG. 8

*A* LIQUID SURFACE